# EUROPÄISCHE PATENTSCHRIFT

(11) **EP 0 830 571 B1**
(45) Veröffentlichungstag und Bekanntmachung des Hinweises auf die Patenterteilung: **26.09.2001**
(21) Anmeldenummer: 96909132.1
(22) Anmeldetag: 27.03.1996
(51) Int. Cl.: G01D 5/14, G01D 5/16, G01P 3/488

(54) **ANORDNUNG ZUR ERFASSUNG EINER BEWEGUNG**
MOVEMENT-DETECTING ARRANGEMENT
DISPOSITIF D'ENREGISTREMENT D'UN MOUVEMENT

(30) Priorität: 07.06.1995 DE 19520683
(43) Veröffentlichungstag der Anmeldung: 25.03.1998
(73) Patentinhaber: Continental Teves AG & Co. oHG, 60488 Frankfurt (DE)
(72) Erfinder: BLECKMANN, Hans-Wilhelm, D-61231 Bad Nauheim (DE); LOHBERG, Peter, D-61381 Friedrichsdorf (DE); LORECK, Heinz, D-65510 Idstein (DE)
(86) Internationale Anmeldenummer: EP9601338
(87) Internationale Veröffentlichungsnummer: WO9641133

(56) Entgegenhaltungen:
- DE-U- 9 305 385
- US-A- 4 468 618
- US-A- 4 629 982
- US-A- 4 783 627

## Beschreibung

Die vorliegende Erfindung betrifft eine Anordnung zur Erfassung einer Bewegung gemäß dem Oberbegriff des Anspruchs 1, wie z.B. bekannt aus DE-U-9 305 385, US-A-4 629 982 und US-A-4 468 618.

Derartige Anordnungen werden im allgemeinen aktive Bewegungssensoren genannt, weil die zugehörigen Sensorelemente eine eigene Versorgungsspannung benötigen. Unter dem Begriff Bewegung sind dabei Positionsänderungen, Ortsverschiebungen, Drehzahlen und Bewegungsgeschwindigkeiten zu verstehen. Bewegungssensoren werden im Bereich des Maschinenbaus, insbesondere jedoch in der Kraftfahrzeugindustrie verwendet, hierbei vorwiegend im Anwendungsbereich geregelter Bremsen, bei Stellungsgebern, Winkelpositionsgebern, motorischen Verstelleinrichtungen oder zur Erfassung von Raddrehzahlen.

Bewegungssensoren bestehen in der Regel aus einem Impulsgeber, der mechanisch mit dem bewegten Teil verbunden ist, und einem Sensorelement, welches diesen Impulsgeber berührungslos abtastet. Diese Abtastung erfolgt über Licht, Hochfrequenz, elektrische oder magnetische Felder, insbesondere durch permanentmagnetische Felder. All diese Felder sind im Anspruch als elektromagnetische Felder bezeichnet.

Als Impulsgeber können Lochscheiben, Zahnräder und magnetisierte Strukturen dienen. Zwischen Impulsgeber und Sensorelement befindet sich ein definierter Luftspalt.

Aktive Bewegungssensoren arbeiten beispielsweise mit dem Hall-Effekt oder mit dem magnetoresistiven Effekt dünner Permalloy-Schichten. Die zugehörigen Sensorelemente werden als Chips in Silizium- bzw. Dünnschichttechnik realisiert. Neben mindestens zwei magnetfeldempfindlichen Komponenten, bestehend aus sensorischen Flächenzonen, befindet sich häufig auch gleich eine zugehörige Elektronik zur Signalverstärkung, Schmitt-Trigger und Schutzbeschaltung auf dem Chip. Es sind Ausführungsformen mit 3-Leiter-Zuführungen und solche mit 2-Leiter-Zuführungen bekannt. Die Erfindung kann für alle Varianten aktiver Sensoren genutzt werden. Sie soll die Anwendungsmöglichkeiten solcher Sensoren verbessern und erweitern, bei denen schaltungsintern beispielsweise zwei feldempfindliche Komponenten in Differenzschaltung oder vier feldempfindliche Komponente in Brückenschaltung betrieben werden und bei denen durch eine Verstärker-/Trigger-schaltung im Bereich eines Nennluftspaltes unabhängig von der Größe dieses Luftspaltes ein binäres Ausgangssignal generiert wird, aus dessen Flankenwechseln eine Information über eine Bewegung des Impulsgebers gewonnen wird.

Die Differenz- oder Brückenschaltung mehrerer feldempfindlicher Komponenten wird unter anderem angewandt, um Störeinflüsse durch Fertigungstoleranzen, Störfelder und Temperatureinflüsse auf das Ausgangssignal zu vermindern. Die Auswertung einer Felddifferenz anstatt einer absoluten Feldstärke ist der Differenz- und Brückenschaltung gemeinsam und hat bei den Methoden den Nebeneffekt, daß beim Anlegen einer Versorgungsspannung anfänglich keine Aussage über die Position des Impulsgebers gemacht werden kann.

Befinden sich beide feldempfindlichen Komponenten im Bereich der hohen Feldstärke, so ist die Differenz genauso gleich Null wie in einer Position, in welcher sich beide feldempfindliche Komponenten in einem Bereich niedriger Feldstärke befinden. Erst dann, wenn eine der sensorischen Komponenten einen Wechsel der Feldstärke durchlaufen hat, während sich andere Komponente noch in einem Bereich der ursprünglichen Feldstärke befindet, kann über die Differenz dieser Feldstärken eine genaue Definition einer Ausgangsposition erfolgen. Bei vielen technischen Anwendungsfällen ist es jedoch wünschenswert, unmittelbar beim Einschalten der Versorgungsspannung Information darüber zu erhalten, ob sich die feldempfindlichen Komponenten in einem Bereich niedriger oder hoher Feldstärke befinden.

Beispielsweise kann anhand eines binären Ausgangssignals kein Rückschluß auf die Größe des zwischen Impulsgeber und Sensorelement eingestellten Luftspaltes bezogen werden. Das Ausgangssignal setzt jedoch mit Überschreiten eines Grenzluftspaltes schlagartig aus, da dann eine sensorinterne Empfindlichkeitsschwelle unterschritten wird. Wird ein aktiver Sensor durch Einbaufehler ungewollt an der Grenze seines maximal zulässigen Luftspaltes betrieben, so kann eine ausreichend große dynamische Verformung der Kinematik zwischen Sensorelement und Impulsgeber den Luftspalt unter Umständen derart vergrößern, daß der Grenzluftspalt überschritten wird und das Signal aussetzt. Der vorliegenden Erfindung liegt daher die Aufgabe zurgunde, eine Anordnung gemäß dem Oberbegriff des Anspruchs 1 zu schaffen, die in der Lage ist, sofort bei Einschaltung der Versorgungsspannung Informationen über den Abstand zwischen Impulsgeber und Sensorelement zu geben.

Diese Aufgabe wird gelöst in Verbindung mit den kennzeichnenden Merkmalen des Anspruchs 1. Durch Umschaltung des Sensorelementes auf die Messung der absoluten Feldstärke ist es auch ohne Bewegung des Impulsgebers möglich, das Lageverhältnis zwischen Impulsgeber und Sensorelement festzustellen.

Eine derartige Umschaltung des Sensorelements erfolgt sinnvollerweise über begrenzte Zeitintervalle, wobei der Umschaltvorgang beispielsweise einen Zeitzähler auslösen kann. Um einen automatischen Umschaltvorgang herbeizuführen, kann dieser beispielsweise immer dann erfolgen, wenn die für das Sensorelement erforderliche Versorgungsspannung eingeschaltet wird. Damit werden automatisch bei jeder Inbetriebnahme des Sensorelementes Testläufe gestartet.

Um auch während des Betriebes des Sensorelementes, also beispielsweise dann, wenn dynamische Verformungen auftreten, einen ordnungsgemäße Einbaulage zu überprüfen, können derartige Testläufe in bestimmten Zeitabständen durchgeführt werden.

Um ein analoges Signal zu erhalten, kommen verschiedene Maßnahmen in Betracht:

Zum einen kann beispielsweise bei einer Differenzschaltung der feldempfindlichen Komponenten jeweils durch Unterdrückung der sensorischen Wirkung einer der beiden Komponenten, z.B. durch Kurzschluß dieser Komponente oder durch die Unterbrechnung ihrer Signalleitung zum Differenzverstärker jeweils nur das Signal einer einzigen Komponenten ausgewertet werden. Es ist zum anderen aber auch möglich, beide Komponenten nicht in Differenzschaltung, sondern in Reihen- oder Parallelschaltung zu betreiben, so daß sie ein gleichgerichtetes Signal erzeugen.

Im Falle einer Brückenschaltung kann natürlich auf ähnliche Weise verfahren werden, nämlich Aufhebung der Brückenwirkung zugunsten einer schaltungstechnischen Kombination aller oder einzelner sensorischer Teilflächen, auch mit elektronischen Zusatzkomponenten, so daß eine Schaltung entsteht, mit der ein Maß für die absolute Feldstärke gewonnen werden kann.

Soll diese Möglichkeit zur Messung der absoluten Feldstärke dazu verwendet werden, um zu überprüfen, ob das Sensorelement in einem korrekten Lageverhältnis zum Impulsgeber eingebaut ist, so wird das Sensorelement sinnvollerweise so ausgestattet, daß es bei einem fehlerhaften Einbau eine Rückmeldung an das elektronische Steuergerät gibt.

Eine nähere Erläuterung der Erfindung erfolgt nun anhand einer Figurenbeschreibung.

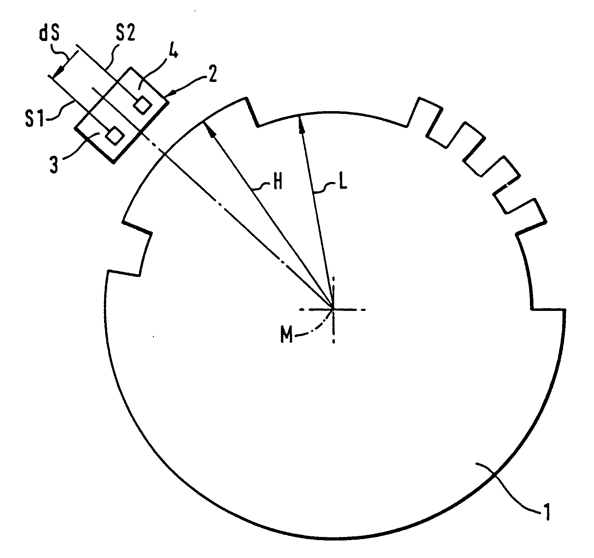

Die einzige Fig. zeigt in schematischer Darstellung ein Sensorelement in Differenzschaltung und einen Impulsgeber.

In einem bestimmten Abstand zum Mittelpunkt M einer Impulsgeberscheibe 1 ist ein Sensorelement 2 angeordnet, welches zwei feldempfindliche Komponenten 3 und 4 aufweist. Die Impulsgeberscheibe 1 dreht sich um den Mittelpunkt M. Sie enthält eine Winkelinformation in Form einer binären Kodierung durch zwei Radien H und L (high und low).

Bei der Impulsgeberscheibe 1 sind die Bereiche der Radien H und L asymmetrisch am Umfang verteilt, um auch die Drehrichtung der Impulsgeberscheibe feststellen zu können. Dies ist für die Erfindung jedoch nicht von Bedeutung.

Die feldempfindlichen Komponenten 3 und 4 bestehen aus sensorischen Flächen, die in Verbindung mit der Impulsgeberscheibe jeweils ein gleiches Signal S1 und S2 erzeugen, wenn sie sich beide im Bereich desselben Radius H oder L befinden. Befindet sich eine der feldempfindlichen Komponenten in einem anderen Radiusbereich als die andere, so unterscheiden sich die Signale S1 und S2. Die Signaldifferenz dS wird dann ausgewertet. Das Sensorelement ist in bekannter Weise mit einem Permanentmagneten ausgestattet der der Übersichtlichkeit halber nicht dargestellt ist. Bedingt durch die Symmetrie der Anordnung ist dS sowohl im Umfangsbereich mit Radius H als auch im Umfangsbereich mit Radius L gleich Null. Beim Einschalten der Versorgungsspannung ist daher nicht bekannt, ob eine Signaldifferenz dS gleich Null von einer Zone großen oder kleinen Radius herrührt. Erst mit dem Überfahren des ersten Flankenüberganges von H zu L oder umgekehrt herrschen definierte Ausgangszustände. Bei vielen technischen Anwendungsfällen ist es jedoch wie beschrieben wünschenswert mit der Einschaltung der Betriebsspannung festzustellen, ob sich das Sensorelement in einem H- oder einem L-Bereich befindet.

Wenn beim Einschalten der Versorgungsspannung beispielsweise das Signal S2 unterdrückt wird, so gibt das Signal S1 Information über den tatsächlichen Abstand zum Rand der Impulsgeberscheibe 1. Dasselbe gilt für Reihen- oder Parallelschaltung bei welchen sich die Signalspannungen bzw. die Signalströme addieren.

Zur Einstellung eines Zeitintervalls zur Messung der absoluten Feldstärke ab Einschaltung der Versorgungsspannung kann beispielsweise der Ablauf eines Zählvorganges dienen, der mit dem Einschalten der Versorgungsspannung ausgelöst wird. Diese Zeitsteuerung und auch die wechselweise Verknüpfung der sensorischen Komponenten läßt sich unter Anwendung moderner mikroelektronischer Verfahren leicht in einen Chip zusätzlich integrieren.

Die Erfindung läßt sich auch anwenden zur Kontrolle eines ordnungsgemäßen Lageverhältnisses zwischen Impulsgeberscheibe 1 und Sensorelement 2. Hierfür ist es von Bedeutung, in welchem Abstand sich das Sensorelement 2 von der Impulsgeberscheibe 1 befindet. Zur Kontrolle dieses Luftspaltes wird mit dem Zuschalten der Betriebsspannung - wie beschrieben - ein Maß für die absolute Feldstärke im Luftspalt der Impulsgeberscheibe gewonnen und über eine ADC-Funktion intern klassifiziert. Dies kann im einfachsten Fall durch einen Festkomparator geschehen, der eine minimal zulässige Feldstärkegrenze markiert, die wiederum einem maximal zulässigen Einbauluftspalt entspricht. Wird nach dem Zuschalten der Betriebsspannung ein unzulässig großer Luftspalt erkannt, so erfolgt dann eine Fehlerrückmeldung an ein Steuergerät, von dem aus der Sensor betrieben wird. Zur Rückmeldung können unterschiedliche Kennzeichen verwendet werden, z.B. das Senden einer bestimmten Frequenz, eines bestimmten Frequenzmusters oder eines charakteristischen Strompegels. Diese Kontrolle des Luftspaltes kann auch während der Fahrt eines Kraftfahrzeuges wiederholt werden.

Zur Erkennung, ob sich das Sensorelement in einem H- oder L-Bereich der Impulsgeberscheibe befindet, wird mit dem Zuschalten der Versorgungsspannung, wie vorstehend beschrieben, ebenfalls ein Maß für die absolute Feldstärke gewonnen und danach der binäre Signalausgangspegel des Sensors auf H oder L gesetzt, entsprechend dem vorliegenden Umfangsbereich.

## Patentansprüche

1. Anordnung zur Erfassung einer Bewegung, mit einem aktiven Sensorelement (2), das mindestens zwei feldempfindliche Komponenten (3,4) umfaßt, wobei das Sensorelement (2) mit einem Impulsgeber (1) zusammenwirkt, der Impulsgeber durch Bewegung ein elektromagnetisches Feld beeinflußt, welches über die feldempfindlichen Komponenten (3,4) erfaßt wird, und wobei das Sensorelement (2) ein binäres Signal (dS) erzeugt, welches Informationen darüber enthält, ob die feldempfindlichen Komponenten (3,4) dieselben oder unterschiedliche Feldstärken erfassen, **dadurch gekennzeichnet, daß** das Sensorelement (2) auf die Messung der absoluten Feldstärke umschaltbar ist, wobei die Umschaltung für begrenzte Zeitintervalle erfolgt und ein solches Zeitintervall immer dann einsetzt, wenn eine Versorgungsspannung angelegt wird.

2. Anordnung nach Anspruch 1, **dadurch gekennzeichnet, daß** die Zeitintervalle in bestimmten Zeitabständen einsetzen.

3. Anordnung nach einem der Ansprüche 1 oder 2, **dadurch gekennzeichnet, daß** zur Messung der absoluten Feldstärke die hierzu verwendeten Komponenten (3,4) in Reihe geschaltet werden.

4. Anordnung nach einem der Ansprüche 1 oder 2, **dadurch gekennzeichnet, daß** zur Messung der absoluten Feldstärke die hierzu verwendeten Komponenten (3,4) parallel geschaltet werden.

5. Anordnung nach einem der vorhergehenden Ansprüche, **dadurch gekennzeichnet, daß** an ein Steuergerät eine Rückmeldung erfolgt, falls die gemessene absolute Feldstärke auf eine unzulässige Lageabweichung des Sensorelementes (2) schließen läßt.

## Claims

1. Motion sensing arrangement, including an active sensor element (2) comprising at least two field-sensitive components (3, 4), and the sensor element (2) cooperates with a pulse generator (1), and the pulse generator by its motion influences an electromagnetic field which is sensed by way of the field-sensitive components (3, 4), and the sensor element (2) produces a binary signal (dS) which contains data about whether the field-sensitive components (3, 4) sense identical or different field strengths,
**characterized in that** the sensor element (2) can be switched over to measuring the absolute field strength, wherein the switch-over is made for limited time intervals, and such a time interval always commences when a supply voltage is applied.

2. Arrangement as claimed in claim 1,
**characterized in that** the time intervals occur in defined time periods.

3. Arrangement as claimed in any one of claims 1 or 2,
**characterized in that** the components (3, 4) used for measuring the absolute field strength are connected in series.

4. Arrangement as claimed in any one of claims 1 or 2,
**characterized in that** the components (3, 4) used for measuring the absolute field strength are connected in parallel.

5. Arrangement as claimed in any one of the preceding claims,
**characterized in that** a feedback is sent to a control unit in case the measured absolute field strength indicates an inadmissible difference in position of the sensor element (2).

## Revendications

1. Agencement de détection d'un mouvement, comprenant un élément détecteur actif (2) qui comporte au moins deux composants sensibles au champ (3, 4), l'élément détecteur (2) coopérant avec un générateur d'impulsions (1), lequel générateur d'impulsions influe, sous l'effet d'un mouvement, sur un champ électromagnétique qui est détecté au moyen des composants sensibles au champ (3, 4), tandis que l'élément détecteur (2) produit un signal binaire (dS) qui contient des informations indiquant si les composants sensibles au champ (3, 4) détectent la même intensité de champ ou des intensités de champ différentes, **caractérisé en ce que** l'élément détecteur (2) peut être commuté sur la mesure de l'intensité absolue de champ, la commutation ayant lieu pendant des périodes de temps limitées et une telle période de temps étant toujours déclenché lorsqu'une tension d'alimentation est appliquée.

2. Agencement suivant la revendication 1, **caractérisé en ce que** les périodes de temps se déclenchent à des intervalles de temps déterminés.

3. Agencement suivant l'une des revendications 1 et 2, **caractérisé en ce que**, pour la mesure de l'intensité absolue de champ, les composants (3, 4) utilisés à cet effet sont montés en série.

4. Agencement suivant l'une des revendications 1 et 2, **caractérisé en ce que**, pour la mesure de l'intensité absolue de champ, les composants (3, 4) utilisés à cet effet sont montés en parallèle.

5. Agencement suivant l'une des revendications précédentes, **caractérisé en ce qu'**une confirmation en retour a lieu vers un appareil de commande si l'intensité absolue de champ mesurée permet de conclure à un écart de position inadmissible de l'élément détecteur (2).
